(19) Europäisches Patentamt
European Patent Office
Office européen des brevets

(11) **EP 1 792 385 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(21) Anmeldenummer: **05789509.6**

(22) Anmeldetag: **16.09.2005**

(51) Int Cl.:
*H02K 41/03* (2006.01)      *H02K 21/04* (2006.01)
*H02K 19/10* (2006.01)

(86) Internationale Anmeldenummer:
**PCT/EP2005/054630**

(87) Internationale Veröffentlichungsnummer:
**WO 2006/032638 (30.03.2006 Gazette 2006/13)**

(54) **ELEKTRISCHE MASCHINE**

ELECTRIC MACHINE

MACHINE ELECTRIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.09.2004 DE 102004045992**

(43) Veröffentlichungstag der Anmeldung:
**06.06.2007 Patentblatt 2007/23**

(73) Patentinhaber: **Siemens Aktiengesellschaft 80333 München (DE)**

(72) Erfinder:
• **JAJTIC, Zeljko**
  **80992 München (DE)**
• **VOLMERT, Christian**
  **80539 München (DE)**

(56) Entgegenhaltungen:
**US-A- 6 093 992      US-A1- 2003 122 440
US-A1- 2003 141 769      US-E1- R E37 027**

• **IWABUCHI N ET AL: "A NOVEL HIGH-TORQUE RELUCTANCE MOTOR WITH RARE-EARTH MAGNET" IEEE TRANSACTIONS ON INDUSTRY APPLICATIONS, IEEE SERVICE CENTER, PISCATAWAY, NJ, US, Bd. 30, Nr. 3, 1. Mai 1994 (1994-05-01), Seiten 609-613, XP000459019 ISSN: 0093-9994**
• **PATENT ABSTRACTS OF JAPAN Bd. 004, Nr. 130 (E-025), 12. September 1980 (1980-09-12) -& JP 55 083453 A (NEC CORP), 23. Juni 1980 (1980-06-23)**

**Beschreibung**

Die Erfindung betrifft eine elektrische Maschine gemäß dem Oberbegriff des Anspruchs 1. Die Erfindung betrifft weiter eine Transportvorrichtung mit einer derartigen elektrischen Maschine.

Eine solche elektrische Maschine ist beispielsweise in dem Artikel "A Novel High-Torque Reluctance Motor with Rare-Earth Magnet" von N. Iwabuchi et al. in IEEE Transactions on Industry Applications 20(1994), May/June, No. 3, New York, US, Seiten 609 bis 613 beschrieben und ist ferner auch aus der US 2003/0122440 A1 bekannt.

In dem genannten IEEE-Artikel von Iwabuchi et al. sind jeweils am Endbereich der Zähne die Permanentmagneten angebracht, deren Polarität sich innerhalb eines Zahns und auch zahnüberbrückend von Permanentmagnet zu Permanentmagnet abwechselt.

In der US 2003/0122440 A1 ist beschrieben, dass die Permanentmagnete auch innerhalb eines Zahns angeordnet werden können. Bei einer Ausführungsform ist jeweils ein Permanentmagnet im Endbereich des Zahns in diesem angeordnet. Bei einer anderen Ausführungsform ist in jedem zweiten Zahn des Primärteils ein schräg stehender Permanentmagnet angeordnet.

In der US RE 37 027 E umfasst ein Primärteil zwei Spulen und zwei Permanentmagnete an unterschiedlichen Stellen. Aufgabe der vorliegenden Erfindung ist es, eine vereinfachte elektrische Maschine anzugeben, deren Aufbau vereinfacht bzw. kostengünstiger erfolgen kann. Ein derartiger vereinfachter Aufbau ist insbesondere bei einer Synchronmaschine wünschenswert. Synchronmaschinen gibt es beispielsweise in der Ausprägung als eine permanenterregte Synchronmaschine oder als fremderregte Synchronmaschine.

Die Lösung der Aufgabe gelingt mittels einer elektrischen Maschine mit den im Anspruch 1 angegebenen Merkmalen sowie durch eine Transporteinrichtung mit einer derartigen elektrischen Maschine

Die Unteransprüche sind erfinderische Ausgestaltungen bzw. Weiterentwicklungen.

Für den strukturellen Aufbau von Primärteil und Sekundärteil sind vorteilhafter Weise Weicheisenteile verwendbar. Die Blechung dieser Teile reduziert Wirbelströme. In weiteren Ausführungsformen können die Weicheisenteile auch massiv und/oder als so genannte Pulverpressteile ausgeführt sein.

Mittels einer erfindungsgemäßen elektrischen Maschine ist beispielsweise ein Linearmotor aufbaubar. Bei einem derartigen Linearmotor sind Permanentmagnete in ein spulentragendes Primärteil des Linearmotors integriert. Dieser Aufbau birgt insbesondere bei langen Verfahrwegen Kostenvorteile. Das Sekundärteil des Linearmotors besteht dann beispielsweise nur aus einer Eisen-Reaktionsschiene. Hierdurch ist auch die Sicherheit des Linearmotors erhöhbar.

Die Kostenvorteile bei einem derartigen Linearmotor ergeben sich z.B. daraus dass bislang der Linearmotor, welcher ein Synchronlinearmotor ist, ein elektrisch erregbares Primärteil aufweist, welches einem mit Permanentmagneten bestücktem Sekundärteil gegenübersteht. Hierbei ist eine Langstatorbauweise wie auch eine Kurzstatorbauweise möglich. In dem einen Fall wird sehr viel Kupfer benötigt, in dem anderen Fall sehr viel Magnetmaterial. Beides bringt hohe Kosten mit sich. Die im Sekundärteil bei bereits bekannten Linearmotoren untergebrachten Permanentmagnete bilden eine offene Strecke. Die Magnete (Permanentmagnete) sind auf der ganzen Länge vor Umwelteinflüssen wie Späne, Öl oder anderen Verunreinigungen zu schützen, was aufwendig ist. Des Weiteren ist wegen der starken Anziehungskräfte der Permanentmagnete auf der Länge des Sekundärteils auf Personenschutz zu achten. Auch diese Schutzmaßnahmen verursachen Kosten und technischen Aufwand. Mit Hilfe eines Sekundärteils der erfindungsgemäßen elektrischen Maschine lässt sich der Aufwand erheblich reduzieren.

Es sind die Permanentmagnete in das Primärteil integriert, so dass Spulen (Wicklungen) und Magnete (Permanentmagnete) im selben Teil (Primärteil) der elektrischen Maschine untergebracht sind. Für eine Kurzstatorbauweise wird, im Vergleich zum bekannten Motorprinzip wesentlich weniger Magnetmaterial benötigt. Da das Primärteil ohnehin schon bislang gegen Umwelteinflüsse geschützt wird, und dort auch bereits der Personenschutz Berücksichtigung findet, kann bei der Integration der Magnete in das Primärteil auf zusätzliche Schutzvorrichtungen verzichtet werden. Das Sekundärteil besteht vorteilhafter Weise nur aus einer Eisen-Reaktionsschiene von der keine Gefährdung ausgeht.

Die erfindungsgemäße elektrische Maschine ist insbesondere eine Synchronmaschine. Synchronmaschinen sind präzise regelbar und können hohe Anforderungen an Bewegungsgenauigkeit und Positioniergenauigkeit erfüllen. Durch den erfindungsgemäßen einfachen bzw. kompakten Aufbau der Synchronmaschine ergeben sich die vielfältigsten obig bereits ansatzweise beschriebenen Vorteile.

Auftretende Rastmomente sind nach bereits bekannten Methoden verminderbar. Derartige Methoden sind z.B.: Schrägung der Permanentmagnete, Schrägung einer Zahnung, usw.

In einer vorteilhaften Ausführungsform ist das Primärteil modular aufgebaut. Durch die Anzahl der Zähne bzw. die entsprechenden Wicklungen kann die Motorlänge variiert werden. Hieraus resultiert die Möglichkeit die Nennkraft des Motors anzupassen.

In einer weiteren Ausgestaltung der elektrischen Maschine wechseln sich im Sekundärteil Bereiche unterschiedlicher Magnetisierbarkeit ab. Eine unterschiedliche Magnetisierbarkeit besteht beispielsweise zwischen einem weichmagnetischen Material welches z.B. aus Eisen herstellbar ist und Luft bzw. Kunststoff. Mittels der sich abwechselnden Bereiche lässt sich so das magnetische Feld innerhalb des Sekundärteils führen. Erfindungsgemäß ist das Sekundärteil derart ausgeführt, dass dieses zum Primärteil hin gerichtete Zähne aufweist. Der Hauptfluss wird somit innerhalb des Sekundärteils über die Zähne und über den gegebenenfalls vorhandenen Rückschluss geführt. Bei der Führung des Flusses über die Zähne ist der Fluss beispielsweise jeweils nur über einen Zahn oder über zumindest zwei Zähne führbar.

In einer weiteren vorteilhaften Ausgestaltung sind die Zwischenräume zwischen den Zähnen, welche beispielsweise auch als Riegel bezeichenbar sind gefüllt. Die Füllung besteht beispielsweise aus Kunststoff. Durch die Füllung kann sich beispielsweise zwischen den Zähnen kein Schmutz ansammeln.

Eine elektrische Maschine ist auch derart ausführbar, dass ein Sekundärteil Zähne aufweist, welche mit einem Teilungsabstand Tau_Sek zueinander angeordnet sind. Das Primärteil der elektrischen Maschine beinhaltet das zweite Mittel zur Erzeugung eines magnetischen Erregerfeldes, welches aus einer Vielzahl der Mittel realisiert wird (z.B. viele Permanentmagnete), die mit einem Teilungsabstand Tau_Prim zueinander angeordnet sind.

Bei einer bevorzugten Ausführung der elektrischen Maschine lässt sich die Beziehung zwischen Tau_Sek und Tau_Prim durch die Gleichung:

$$\texttt{Tau\_Sek} \neq \texttt{n*Tau\_Prim} \quad \texttt{wobei n= 1,2,3,...}$$

angeben. Der Teilungsabstand Tau_Sek ist also kein ganzzahliges Vielfaches des Teilungsabstandes Tau_Prim.

In einer weiteren vorteilhaften Ausgestaltung ist die erfindungsgemäße elektrische Maschine mit einem Stromrichter verbunden. Der Stromrichter ist insbesondere ein Wechselrichter, welcher zur Bestromung des ersten Mittels zur Erzeugung eines ersten magnetischen Feldes vorsehbar ist. Die elektrische Maschine und der Stromrichter bilden einen Antrieb. Die elektrische Maschine ist daher auch derart ausführbar, dass das Primärteil mehrere Wicklungen aufweist, wobei verschiedene Wicklungen mit einer Wechselspannung bzw. einem Wechselstrom mit unterschiedlicher Phasenlage bestrombar sind. Durch die Verwendung unterschiedlicher Phasenlagen lässt sich ein gleichmäßiger Kraftverlauf bei der Bewegung des Primärteils und/oder des Sekundärteils der elektrischen Maschine hervorrufen. Ein derartiger gleichmäßiger Kraftverlauf ist auch derart ausbildbar, dass verschiedene Wicklungen eines Primärteils einer elektrischen Maschine in ihrer Position zum Sekundärteil derart phasenversetzt sind, dass dadurch eine gleichmäßigere Kraftentwicklung ermöglicht ist. So wird zum Beispiel bei einer dreisträngigen Maschine (m=3) vorteilhafter Weise ein Phasenversatz von 120° elektrisch gewählt.

Die erfindungsgemäße elektrische Maschine ist auch als rotatorische elektrische Maschine ausführbar. Der Vorteil der Ausführung einer rotatorische Maschine besteht beispielsweise darin, dass besonders große elektrische Maschinen mit großem Radius ausgebildet werden können. Dabei kann sowohl der Rotor als auch der Ständer als Primärteil bzw. als Sekundärteil ausgeführt werden. Vorteilhafterweise ist der Ständer als Primärteil ausgeführt, da somit die Stromzufuhr erleichtert ist.

In einer weiteren vorteilhaften Ausgestaltung ist mittels des Primärteils der elektrischen Maschine nicht nur ein Sekundärteil bewegbar sondern zumindest zwei oder mehrere Sekundärteile. Dies ist beispielsweise bei einem Transportsystem vorstellbar, bei welchem mittels eines Primärteils verschiedenste Sekundärteile, welche beispielsweise Transportkörper wie Kisten tragen, bewegbar sind. Das Primärteil dient dabei beispielsweise für eine oder für mehrere der folgenden Aufgaben: Positionierung des Sekundärteils, Beschleunigung des Sekundärteils, Abbremsen des Sekundärteils.

Die elektrische Maschine ist derart flexibel ausbildbar, dass entweder das Primärteil bewegbar ist oder das Sekundärteil bewegbar ist oder beide Teile bewegbar sind.

In einer weiteren Ausgestaltung der elektrischen Maschine weist diese ein Primärteil und zwei Sekundärteile auf. Das Primärteil ist zwischen den beiden Sekundärteilen angeordnet. Diese Anordnung ist derart ausgebildet, dass sich ein Magnetkreis, welcher sich durch einen magnetischen Nutzfluss ausbildet, über das Primärteil und beide Sekundärteile schließt.

Bei einer weiteren Ausgestaltung der elektrischen Maschine, weist diese zwei Primärteile und ein Sekundärteil auf. Das Sekundärteil ist zwischen den beiden Primärteilen angeordnet. Die Primärteile und das Sekundärteil sind derart ausbildbar, dass sich ein Magnetkreis, welcher sich durch einen magnetischen Nutzfluss ausbildet, über die beiden Primärteile und das Sekundärteil schließt.

Die Primärteile und das Sekundärteil sind jedoch auch derart ausbildbar, dass sich ein Magnetkreis, welcher sich durch einen magnetischen Nutzfluss ausbildet, über jeweils ein Primärteil und das gemeinsame Sekundärteil schließt.

Die Erfindung betrifft auch eine Transporteinrichtung. Die Transporteinrichtung weist vorteilhafter weise eine erfindungsgemäße elektrische Maschine auf. Die Transporteinrichtung weist beispielsweise zumindest ein Primärteil und zumindest ein Sekundärteil auf. Falls die Transporteinrichtung mehrere Primärteile aufweist, so können diese beispielsweise unabhängig voneinander als mehrere separate Motoren oder auch gemeinsam als ein Motor angesteuert werden. Bei einer Anordnung mehrerer Primärteile in einer Ebene, welche beispielsweise eine x-Achse und eine y-Achse aufweist, ist eine zweidimensionale Bewegung realisierbar, indem die Gesamtzahl der Primärteile in zwei Gruppen aufgeteilt ist. Eine erste Gruppe ist für Bewegungen in der x-Achse vorgesehen und eine zweite Gruppe ist für Bewegungen in der y-Achse vorgesehen. Entsprechend ergibt sich auch die Ausrichtung. Diese zwei Gruppen werden beispielsweise nach einem Schachbrett-Muster in der xy-Ebene verteilt. Eine Aktivfläche des Sekundärteils ist dann entsprechend in zwei Bereiche für x- bzw. y-Bewegungsrichtung aufgeteilt.

Die nachfolgenden Figuren zeigen Beispiele sowie erfindungsgemäße Ausgestaltungen von elektrischen Maschinen. Dabei zeigen:

FIG 1     einen Prinzipdarstellung eines Linearmotors,
FIG 2     einen Linearmotor mit Permanentmagneten am Primärteil,
FIG 3     einen ersten Verlauf von magnetischen Feldern im Linearmotor,
FIG 4     einen zweiten Verlauf von magnetischen Feldern im Linearmotor,
FIG 5     einen zeitlichen Verlauf von Fluss, induzierte Spannung und Leistung,
FIG 6     eine Veranschaulichung der Kraftentwicklung,
FIG 7     Geometrie und Feldbild eines Linearmotors mit einer Querfluss-Ausrichtung,
FIG 8     perspektivisch einen Linearmotor mit einer Längsfluss-Ausrichtung,
FIG 9     einen Linearmotor mit einem einen Polschuh aufweisenden Primärteil,
FIG 10    Geometrie und Feldbild eines Linearmotors mit Längsfluss-Ausrichtung,
FIG 11    einen Linearmotor mit unterschiedlichen Strängen für unterschiedliche Phasen,
FIG 12    Geometrie und Feldbild eines Linearmotors mit Zahnmagneten in Flusskonzentration,
FIG 13    Geometrie und Feldbild eines erfindungsgemäßen Linearmotors mit Jochmagneten in Flusskonzentration,
FIG 14    eine Gegenüberstellung eines Primärteils mit einem Querfluss-Magnetkreis und eins Primärteils mit einem Längsfluss-Magnetkreis,
FIG 15    eine Gegenüberstellung von elektrischen Maschinen mit einer Wechselfluss-Anordnung und einer Gleichfluss-Anordnung,
FIG 16    eine elektrische Maschine mit doppelseitig angeordneten Sekundärteilen,
FIG 17    eine elektrische Maschine mit doppelseitig angeordneten Primärteilen,
FIG 18    einen magnetischen Feldverlauf einer QuerflussMagnetkreisanordnung, welcher durch einen elektrischen Strom hervorgerufen ist,
FIG 19    einen magnetischen Feldverlauf einer-QuerflussMagnetkreisanordnung, welcher durch Permanentmagnete hervorgerufen ist,
FIG 20    einen magnetischen Feldverlauf einer QuerflussMagnetkreisanordnung, welcher durch einen elektrischen Strom und durch Permanentmagnete hervorgerufen ist,
FIG 21    eine elektrische Maschine welche eine rotatorische elektrische Maschine ist, wobei der Ständer Permanentmagnete zur Erzeugung eines Erregerfeldes aufweist,
FIG 22    einen Detailausschnitt aus FIG 21 und
FIG 23    eine Transporteinrichtung.

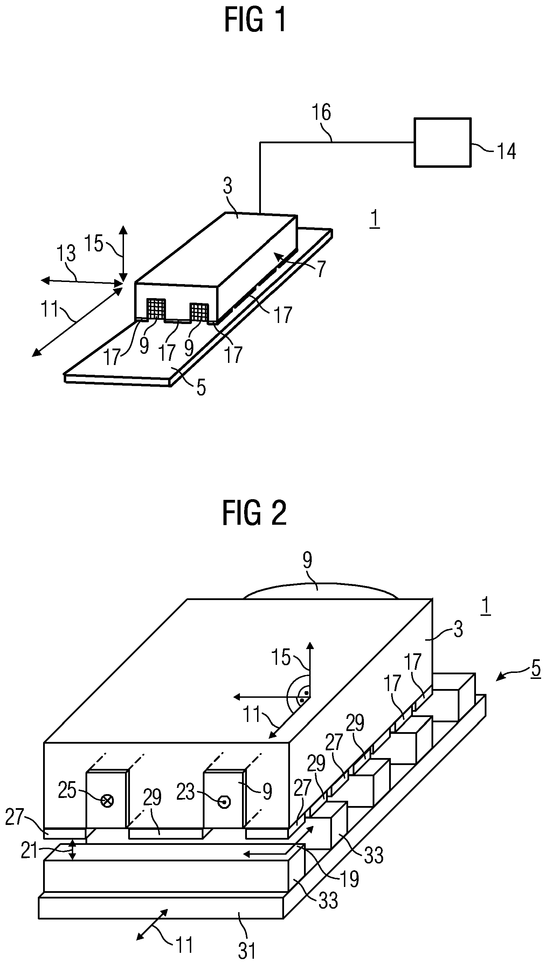

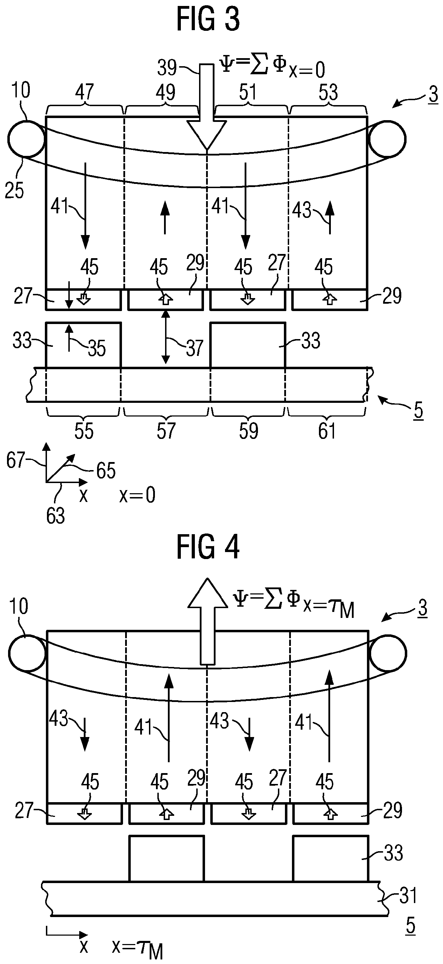

Die Darstellung gemäß FIG 1 zeigt eine elektrische Maschine 1. Die elektrische Maschine 1 weist ein Primärteil 3 und ein Sekundärteil 5 auf. Der Primärteil 3 weist eine Wicklung 9 und Permanentmagnete 17 auf. Die Bewegungsrichtung des Primärteils 3 ist mittels eines Doppelpfeils der in der Längsrichtung 11 verläuft, gekennzeichnet. Ein weiterer Doppelpfeil gibt die Querrichtung 13 an. Mittels eines dritten Doppelpfeils ist die Normale 15 bestimmt, wobei die Normale sich auf eine Luftspaltebene 19 bezieht, wobei die Luftspaltebene 19 in FIG 1 nicht dargestellt ist. Die Luftspaltebene 19 ist jedoch in FIG 2 dargestellt. Mittels eines Pfeils ist eine Seitenansicht 7 angezeigt, welche die Darstellung gemäß FIG 3 und 4 betrifft. Die elektrische Maschine 1 ist ein Linearmotor welcher mittels eins über ein Anschlusskabel 16 angeschlossenen Stromrichter 14 ansteuerbar ist.

Die Darstellung gemäß FIG 2 zeigt eine elektrische Maschine 1. Das Primärteil 3 ist als Blechpaket ausgeführt, wobei das Primärteil 3 eine Wicklung 9 aufweist. Die Wicklung 9 ist eine Strangwicklung, wobei diese mit einem Wechselstrom bestrombar ist. Die Richtung des Stroms ist in FIG 2 zu einem Augenblick dargestellt. Dabei ist die Richtung mittels eines Punktes 23 bzw. mittels eines Kreuzes 25 gekennzeichnet. Das geblecht ausgeführte Primärteil 3 weist an der Seite, welche den Sekundärteil 5 zugewandt ist, Permanentmagnete 17 auf. Die Permanentmagnete 17 sind auf den Primärteil derart angebracht, dass sich deren Magnetisierung in Richtung der Normalen 15 abwechselt. Die Magnete (Permanentmagnete) erzeugen also einen magnetischen Fluss der abwechselnd nach oben (zum Primärteil 3 hin) und nach unten (zum Sekundärteil 5 hin) weist. Nord-Süd-Permanentmagnete (N-S) 27 (die Magnetisierungsrichtung weist zum Sekundärteil) wechseln sich also mit der Süd-Nord-Permanentmagneten (S-N) 29 (die Magnetisierungsrichtung weist zum Primärteil) ab. Zwischen dem Primärteil 3 und dem Sekundärteil 5 bildet sich ein Luftspalt 21 heraus. Dieser Luftspalt 21 spannt die Luftspaltebene 19 auf. Die Bewegung der elektrischen Maschine 1, welche im vorliegenden Fall eine Linearmaschine ist, erfolgt in Richtung der Längsrichtung 11. Hierbei ist es möglich, dass entweder das Primärteil 3 stationär ist und sich das Sekundärteil 5 bewegt oder dass das Sekundärteil 5 stationär ist und sich das Primärteil 3 über das Sekundärteil 5 hinweg bewegt. Die Wicklung 9 ist ein erstes Mittel, zur Erzeugung eines ersten magnetischen Feldes und die Permanentmagnete 17 sind weitere Mittel zur Erzeugung weiterer magnetischer Felder. Die Darstellung gemäß FIG 2 zeigt eine Querflussäusführung der elektrischen Maschine 1. Bei der Querflussausführung ist das Sekundärteil 5 beispielsweise derart ausgeführt, dass dieses einen Träger 31 und Riegel 33 aufweist. Zumindest die Riegel 33 sind geblecht ausgeführt. Die Blechung erfolgt derart, dass sich in Längsrichtung 11 Blech an Blech anschließt. Die Riegel 33 sind auf den Träger 31 beispielsweise aufgeklebt oder aufgelötet oder angeschweißt bzw. in einer Kombination von Befestigungsmöglichkeiten miteinander verbunden. Die Blechung ist zur Vermeidung von Wirbelströmen vorteilhaft. Falls die negativen Wirbelstromeffekte nicht stark ausgeprägt sind (z.B. bei Anwendungen mit ausreichend niedriger elektrischer Grundfrequenz) kann auf Blechung verzichtet werden und kostengünstige Massivteile verwendet werden.

Die Darstellung gemäß FIG 3 zeigt im Ausschnitt in Primärteil 3 und ein Sekundärteil 5. Dieser Ausschnitt gemäß FIG 3 gibt schematisch wieder, wie sich magnetische Felder in einem Primärteil 3 aufteilen können, wobei dabei die Form einer Seitenansicht gewählt ist, welche einer Seitenansicht 7 gemäß FIG 1 entspricht. In der FIG 3 ist eine Windung einer Wicklung 10 gezeigt. Weiterhin ist gezeigt, dass das Primärteil 3 sowie das Sekundärteil 5 in Sektionen aufteilbar sind. Das Primärteil weist Primärsektionen 47, 49, 51 und 53 auf, wobei sich diese Primärsektionen 47, 49, 51 und 53 auf die Permanentmagnete 27, 29 beziehen. Die Sektionen sind dabei Bereiche, in welchen entsprechend der Magnetisierungsrichtung der Permanentmagnete 27 und 29 der magnetische Fluss entweder vom Sekundärteil 5 weg verläuft bzw. zum Sekundärteil 5 hin verläuft. Der Verlauf ist mit Pfeilen 41, 43 dargestellt. Die Summe aller mit der Wicklung 10 verketteten magnetischen Flüsse bildet einen Verkettungsfluss $\psi$. Der Verkettungsfluss wird hauptsächlich durch die Magnete erzeugt die einen magnetischen Rückschluss über das Sekundärteil 5 ausbilden können. Die unterschiedlich langen Flusspfeile zeigen für jeden Magneten den mit der Wicklung (Spule) verketteten Fluss. Das Sekundärteil 5 weist entsprechend den vorhandenen Riegeln 33 auch Sektionen auf. Diese Sekundärsektionen 55, 57, 59 und 61 entsprechen also den Abschnitten in welchen ein Riegel 33 vorhanden bzw. nicht vorhanden ist. Mittels der Riegel 33 ist ein magnetischer Fluss führbar. Die Führung des magnetischen Flusses erfolgt im vorliegenden Beispiel senkrecht zu einer dargestellten X-Achse 63. Der Fluss verläuft also senkrecht zur Blattebene, auf welchen die Figur dargestellt ist, wobei dies einer Y-Achse 65 entspricht. Senkrecht zur X- und Y-Achse steht die Z-Achse, so dass alle Achsen senkrecht aufeinander stehen. Ein magnetischer Erregerfluss, welcher beispielsweise.durch einen Nord-Süd-Permanentmagneten 27 hervorgerufen wird, schließt sich über den Riegel 33 und das Primärteil 3 in einer Sektion 47 in Verbindung mit der Sektion 55. Dabei weist das Primärteil 3 beispielsweise hinter einem ersten Nord-Süd-Permanentmagneten 27 (N-S-Permanentmagnet) einen weiteren Permanentmagneten auf, welcher in entgegengesetzter Richtung magnetisiert ist, so dass dieser eine S-N-Permanentmagnet 29 ist. Ein derartiger Permanentmagnet 29 ist jedoch in der FIG 3 nicht dargestellt, da dieser dahinter zu liegen kommt. An den Positionen, wo ein Riegel 33 einem Permanentmagneten 27, 29 gegenüberliegt, ergibt sich ein schmaler Luftspalt 35. An benachbarten Positionen ohne einen Riegel 33 ergibt sich ein weiter Luftspalt 37. Dadurch, dass die Luftspalte 35 und 37 nicht gleich sind, werden in Sektionen 47,51 und 49,53 durch Permanentmagnete 27 und 29 unterschiedlich starke magnetische Flüsse 41 und 43 erzeugt. Der resultierende Fluss 39 ergibt sich als Summe aller Flüsse 41 und 43.

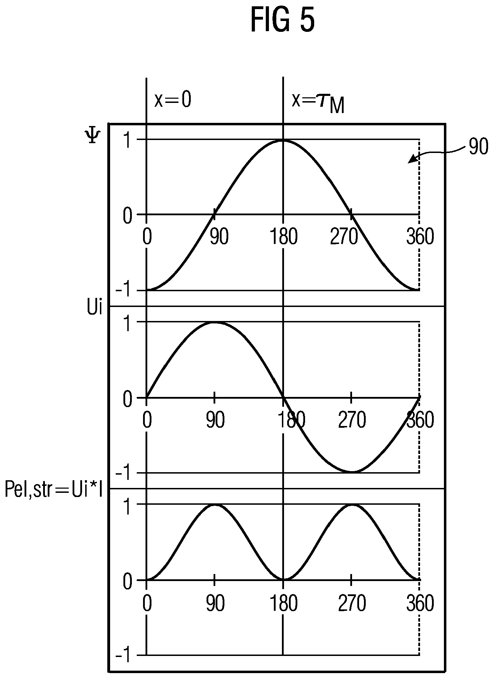

Die Darstellung gemäß FIG 3 zeigt den magnetischen Erregerfluss 41, 43 zeitlich zu dem Zeitpunkt und für die Position von Primärteil 3 und Sekundärteil 5 an, bei welchem ein Strom in der Wicklung 10 einen Nulldurchgang hat. Der positionsabhängige Verlauf des magnetischen Erregerflusses bzw. der induzierten Spannung in der Wicklung und der dabei umgesetzten Leistung eines bestromten Motors sind in Fig. 5 dargestellt. Für die in FIG 3 dargestellte Position des Sekundärteils X=0 ergibt sich ein negativer Verkettungsfluss $\psi$, für die eine Position X=$\tau_M$, welche in FIG 4 dargestellt ist, ein positiver Fluss $\psi$. Die Darstellung gemäß FIG 4 zeigt das Sekundärteil 5 also in einer Position X=$\tau_M$. Bewegt sich das Sekundärteil 5 also um eine magnetische Polteilung, ändert sich dadurch die Flussverkettung 39 der Spule (Wicklung 10) allmählich von einem negativen zu einem positiven Wert. Wie die Änderung verläuft kann durch Geometrieparameter wie Magnetbreite, Luftspalt, Zahnbreite (Breite der Riegel 33) usw. beeinflusst werden. In einer vorteilhaften Ausgestaltung ist eine möglichst sinusförmige Änderung angestrebt.

Die Darstellung gemäß FIG 5 zeigt in drei Graphen den magnetischen Verkettungsfluss $\psi$, die daraus resultierende induzierte Spannung Ui und die elektrische Leistung $P_{el,str}$ eines Strangs/einer Wicklung, im zeitlichen Verlauf. Der zeitliche Verlauf wird durch die Angabe der Phasenposition der Spannung repräsentiert. Der Verlauf des Flusses $\psi$ gibt auch den Verlauf des magnetischen Feldes 90 wieder, welches z.B. mittels Permanentmagneten erzeugbar ist. Für die optimale Kraftbildung eines Stranges muss der Strom in Phase mit der induzierten Spannung eingeprägt werden. Weiterhin sind die Positionen X=0 und X=$\tau_M$ gezeigt, wobei sich diese Positionen zusammen mit den weiteren dargestellten Verläufen von Fluss $\psi$ Spannung $U_i$ und elektrischer Leistung $P_{el,str}$ auf die symbolische Darstellung gemäß FIG 3 und 4 beziehen. Aus dem dritten Graphen, auf welchem die elektrische Leistung aufgetragen ist, ist ersichtlich, dass für eine konstante Leistung (~ Kraft) die Anzahl der Motorstränge m größer und/oder gleich zwei sein muss. Vorteilhafter weise sind drei Stränge gewählt, da dreisträngige Umrichter weniger Halbleiterventile benötigen als zwei- oder mehrsträngige.

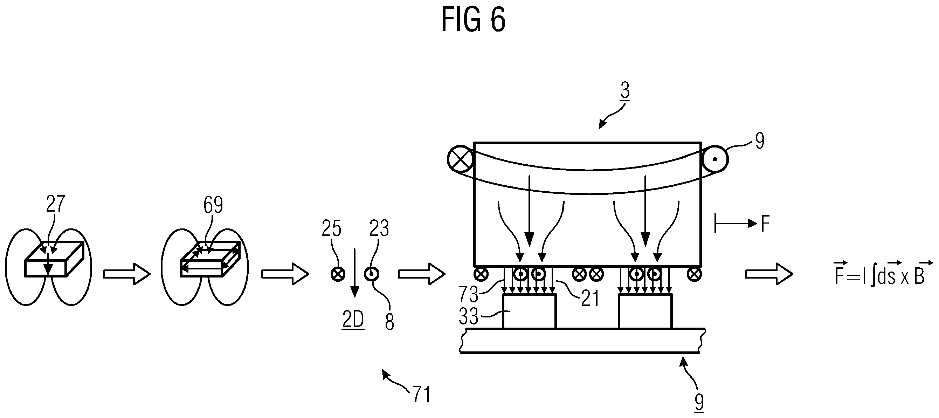

Die Darstellung gemäß FIG 6 dient zur Veranschaulichung des technischen Prinzips und veranschaulicht die Erzeugung einer Kraft F. Um die Kraftbildung in Längsrichtung eins Linearmotors etwas anschaulicher zu machen, wird ein Hilfsmodell vorgestellt. Ein Permanentmagnet 27 wird durch Ströme auf einer diesem zugehörigen Mantelfläche ersetzt. Der Permanentmagnet 27 lässt sich also beispielsweise durch einen Quader gedanklich repräsentieren, wobei auf den Seitenflächen des Quaders 69, wie dargestellt, Strom fließt. In einem Model 71 lässt sich also der Permanentmagnet 27 durch eine Wicklung repräsentieren, wobei gemäß dem Model die Richtung des Stromes innerhalb der Wicklung durch einen Punkt 23 bzw. einem Kreuz 25 dargestellt ist. In der Darstellung 2D wird der Magnet auf den Leiterquerschnitt der äquivalenten Ströme reduziert. Substituiert man nun in der Seitenansicht des Primärteils die Magnete, ergibt sich die darauf folgende Anordnung. Das durch die Wicklung 9 erzeugte magnetische Feld konzentriert sich im Luftspalt 21 an den Stellen der Riegel 33, welche als Flussleitstücke dienen, da hier der magnetische Widerstand am geringsten ist. Die fiktiven Leiter liegen also im Feld der Strangspule, verstärken es auf der einen und schwächen es auf der anderen Seite. Die Leiter "weichen" in den Bereich geringerer Feldstärke aus, was mit der Richtung der auf das Primärteil wirkenden Kraft F in FIG 6 dargestellt ist. Dieser Zusammenhang wird auch durch die "Rechte-Hand-Regel" beschrieben, bei der der Strom, das magnetische Feld und die Kraft F in einem rechten Winkel stehen. In der in FIG 6 gezeigten Lage X=$\tau_{M/2}$ von Primärteil 3 und Sekundärteil 5 zueinander erreicht der Strangstrom, also der Strom durch die Wicklung 9 sein Maximum.

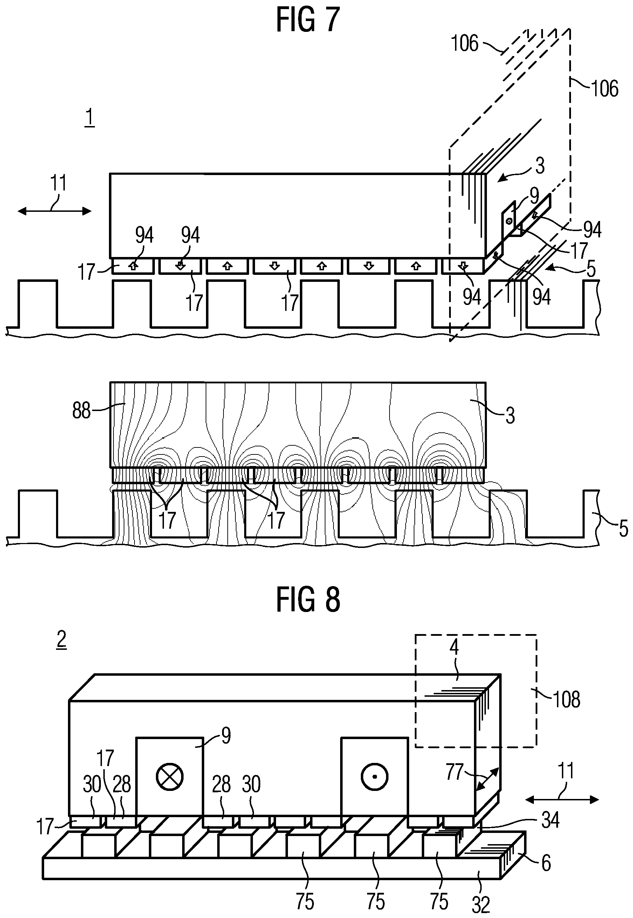

Die Darstellung gemäß FIG 7 zeigt schematisch die Geometrie eines Querfluss-Linearmotors 1 und ein magnetisches Erregerfeld 88, welches von den Permanentmagneten 17 erzeugt wird. Ein magnetischer Nutzfluss ist in einer quer zu einer Bewegungsrichtung (11) ausgerichteten Ebene (106) geführt. Der magnetische Nutzfluss ist der magnetische Fluss, welcher mit der Spule 9 gekoppelt bzw. verkettet ist. Dieser derart ausgerichtete magnetische Nutzfluss bildet einen Querfluss-Magnetkreis aus.

Das Erregerfeld 88 in FIG 7 ist das weitere magnetische Feld bzw. die weiteren magnetischen Felder. Der Linearmotor 1 weist ein geblechtes Primärteil 3 und ein geblechtes Sekundärteil 5 auf. Die Stapelrichtung der Blechpakete ist prinzipiell angedeutet. Die Magnetisierungsrichtung 94 der Permanentmagnete 17 ist mittels Pfeilen verdeutlicht. Die mögliche Bewegungsrichtung des Primärteils ist die Längsrichtung 11.

Die Darstellung gemäß FIG 8 zeigt ein Primärteil 4 und ein Sekundärteil 6. Das Primärteil 4 und das Sekundärteil 6 bilden die elektrische Maschine 2, wobei die elektrische Maschine 2 eine Längsfluss-Anordnüng aufweist. Die Längsfluss-Anordnung zeichnet sich insbesondere dadurch aus, dass die magnetischen Felder sich nicht quer zur Bewegungsrichtung des Primärteils bzw. des Sekundärteils schließen sondern längs der Bewegungsrichtung des Primärteils bzw. längs der Bewegungsrichtung des Sekundärteils. Der magnetische Fluss, welches in einer Ebene 108 geführt ist, wobei die Ebene 108 parallel zur Bewegungsrichtung 11 orientiert ist, ist ein magnetischer Nutzfluss. Der magnetische Nutzfluss ist der magnetische Fluss, welcher mit der Spule 9 gekoppelt ist. Dieser derart ausgerichtete magnetische Nutzfluss bildet einen Längsfluss-Magnetkreis aus.

Das Sekundärteil 6 ist gemäß FIG 8 sowohl im Bereich des Trägers 32 wie auch im Bereich der Riegel 34 geblecht ausgeführt. Die Anordnung der Magnete in der Luftspaltebene ist im Gegensatz zu der Querfluss-Anordnung nicht schachbrettartig ausgeführt sondern streifenförmig. Die Magnete sind bei der Längsfluss-Variante im wesentlichen parallel zu den Riegeln (Flussleitstücken) ausgereichtet. Zur Verringerung von Kraftwelligkeiten können die Magnete jedoch gezielt in einer Art Schräglage positioniert sein.

In einer weiteren vorteilhaften Ausgestaltung wird das Sekundärteil 6 aus Blechen hergestellt, die über die Motorbreite hintereinander gestapelt werden. Bei solchen Blechen bestehen der Träger 32 und die Zähne 75 aus einem Teil. Durch das hintereinander Stapeln der Bleche entsteht die gezahnte Struktur des Sekundärteils mit den Riegeln 34. Die Art der Blechung ist in Fig. 8 angedeutet. Das Sekundärteil kann beispielsweise in Längsrichtung mehrteilig aufgebaut sein, so dass ein Sekundärteil 6 an ein nächstes Sekundärteil angrenzt. Derartige weitere in Bewegungsrichtung angrenzende Sekundärteile sind in der Darstellung gemäß FIG 8 jedoch nicht dargestellt. Die Darstellung gemäß FIG 8 zeigt weiterhin die Permanentmagnete. Die Permanentmagnete sind N-S-Permanentmagnete 28 oder S-N-Permanentmagnete 30. Diese Permanentmagnete erstrecken sich beispielsweise über eine gesamte Blechpaketbreite 77 des Primärteils 4.

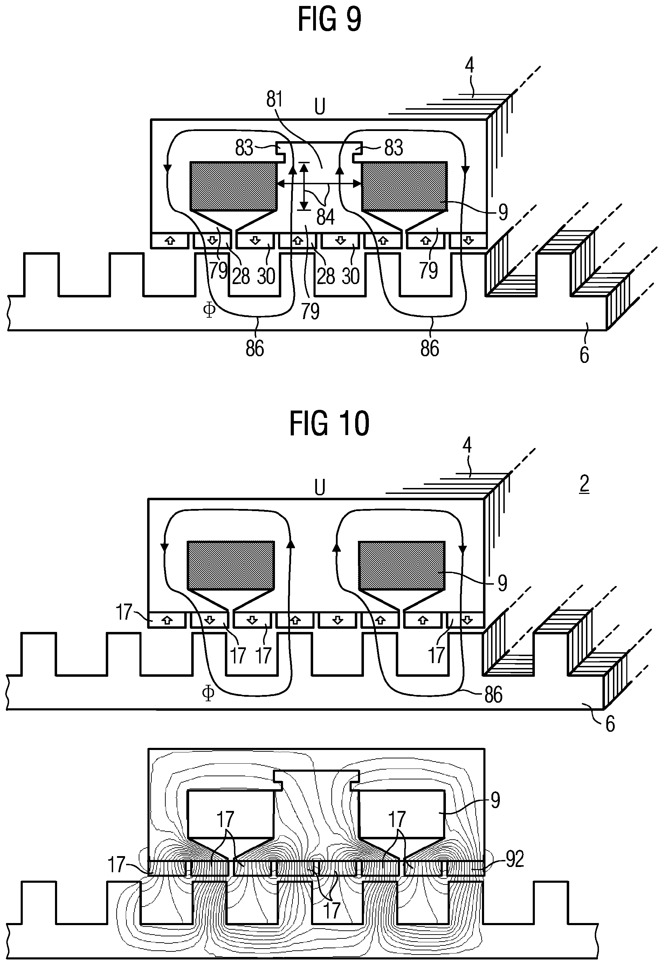

Die Darstellung gemäß FIG 9 zeigt eine Weiterentwicklung einer elektrischen Maschine 2 gemäß FIG 8. Das Primärteil 4 ist dabei derart ausgebildet, dass dieses Polschuhe 79 aufweist. Die Polschuhe 79 verbreitern die Auflagefläche für Permanentmagnete 28, 30. Hierdurch lässt sich die Kraftausbeute der elektrischen Maschine 2 erhöhen. Da sich durch die Vergrößerung der Fläche zur Positionierung der Permanentmagnete der Bereich verengt, in welchem eine Wicklung 9 im Primärteil einlegbar ist, ist das Primärteil 4 vorteilhafterweise derart ausgeführt, dass es einen Wickelkörper 81 aufweist. Der Wickelkörper 81 weist sowohl einen Polschuh 79 wie auch einen Wickelhals 84 auf. Um den Wickelhals 84 ist die Wicklung 9 wickelbar und anschließend in das Primärteil 4 einschiebbar. Der Wickelkörper 81 hält vorteilhafterweise mittels Nasen 83 im Primärteil. In FIG 9 ist die Wicklung 9 als Strang U eines Motors bezeichnet. Weitere Motorstränge (z.B. V und W) sind durch gleich aufgebaute Primärteile 4 realisierbar, jedoch nicht dargestellt. In der dargestellten Position erzeugen die Permanentmagnete 28 und 30 die magnetischen Erregerflüsse 86, deren Summe die Flussverkettung ψ der Spule 9 bildet. Wie aus der Darstellung in FIG 9 ersichtlich ist, bilden die magnetischen Erregerflüsse 86, welche einen Nutzfluss darstellen, einen Längsfluss-Magnetkreis.

Die Darstellung gemäß FIG 10 zeigt einen Linearmotor 2 mit einem Längsfluss-Magnetkreis. Dieser entspricht der Darstellung gemäß FIG 9. In FIG 10 ist zusätzlich die Verteilung der weiteren magnetischen Felder 92 in einer im Bild nach unten versetzten Darstellung dargestellt. Diese weiteren magnetischen Felder 92 sind das magnetische Erregerfeld, welches von den Permanentmagneten 17 hervorgerufen ist.

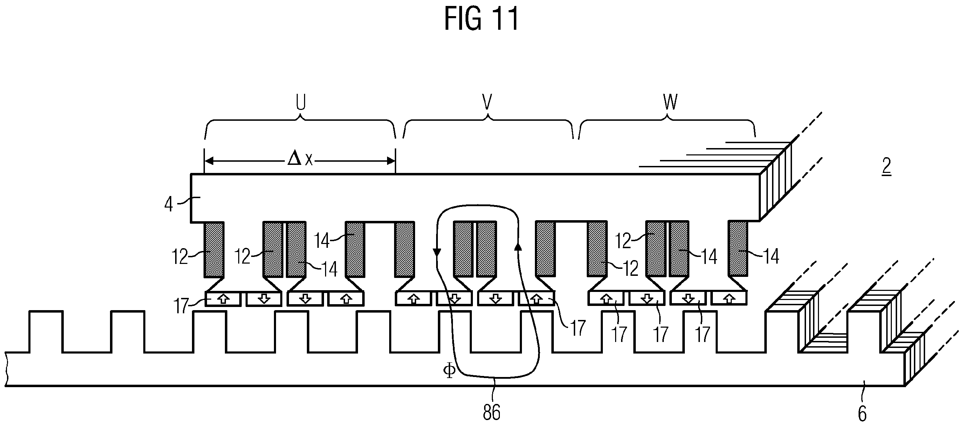

Die Darstellung gemäß FIG 11 zeigt ein weiteres Beispiel für eine elektrische Maschine 2, wobei diese nunmehr mit drei Strängen U, V und W aufbaubar ist. Jeder Strang ist für eine Phase eines Drehstromnetzes vorgesehen. Die erforderliche Phasenverschiebung wird durch den geometrischen Versatz der Stränge untereinander erreicht. Der geometrische Versatz Δx entspricht dabei 120° elektrisch für die dargestellte dreisträngige Maschine. FIG 11 unterscheidet sich bezüglich FIG 10 z.B. auch dadurch, dass jedem Strang U, V und W nicht nur eine Zahnspule 9 zugeordnet ist, sondern deren zwei Zahnspulen 12 und 14 für jeweils einen Strang U, V und W.

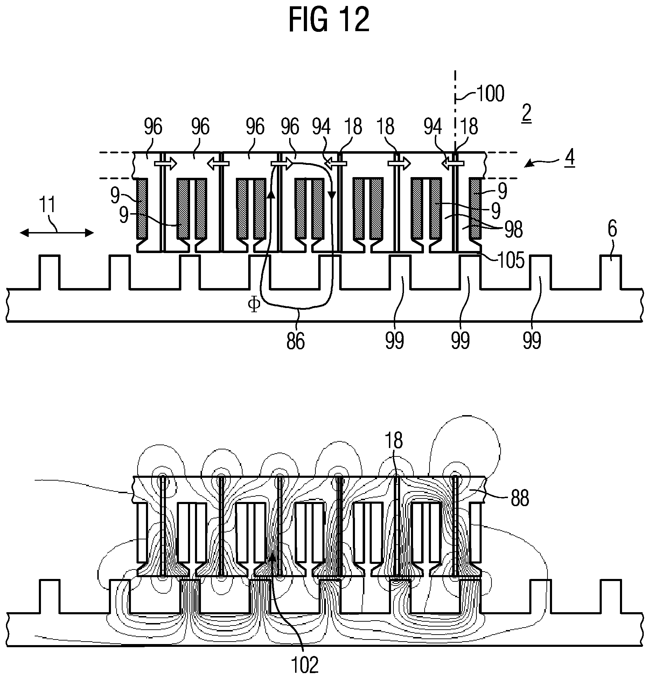

Die Darstellung gemäß FIG 12 zeigt eine elektrische Maschine 2 in Form eines Linearmotors, wobei hier als Permanentmagnete Zahnmagnete 18 verwendet sind. Die Zahnmagnete 18, welche eben auch Permanentmagnete sind, befinden sich zwischen z.B. geblechtem Weicheisenmaterial 96. Das durch die Zahnmagnete 18 erzeugte weitere magnetische Feld 86 ist durch Linien mit Pfeilen gekennzeichnet. Die Magnetisierungsrichtung 94 der Permanentmagnete 18 ist ebenfalls durch Pfeile veranschaulicht. Die Zahnmagnete 18 sind im wesentlichen mittig in einem Zahn 98 positioniert und verlaufen im Wesentlichen parallel zu einer Spulenachse 100 der Zahnspule 9. Der Zahn 98 ist von einer Zahnspule 9 umgeben. FIG 12 zeigt in einer oberen Bildhälfte den geometrischen Aufbau und in einer unteren Bildhälfte den Verlauf des magnetischen Erregerfeldes 88. Das magnetische Erregerfeld 88 ist das weitere magnetische Feld, welches mittels der Zahnmagnete 18 erzeugt ist. Die Darstellung des Erregerfeldes 88 zeigt dabei anschaulich die Wirkung der Flusskonzentration 102. Die Flusskonzentration wird durch die Magnetkreisgeometrie bestimmt. Einflussgrößen sind dabei beispielsweise die Magnetabmessungen und die Blechschnittsabmessungen. Die Magnetisierungsrichtung 94 der Zahnmagnete 18 (der Zahnmagnet ist ein Permanentmagnet) ist hauptsächlich parallel zu einer Luftspaltebene des Luftspaltes 105.

Die Zahnteilung des Sekundärteils 6 der elektrischen Maschine 2 nach FIG 12 ist kein ganzzahliges Vielfaches der Magnetteilung des Primärteils 4. Dies gilt insbesondere für den Mittelwert, falls die Zahn- oder Magnetteilung nicht konstant sind.

Die Spulen 9 sind mit einer und/oder mit mehreren Phasen bestrombar. Die Zuordnung der Spulen zu einzelnen Motorphasen ist vom gewählten Zahnteilungsverhältnis zwischen dem Primärteil 4 und dem Sekundärteil 6 abhängig. Die Darstellung gemäß FIG 12 zeigt bei den Zähnen 98 des Primärteils 4 eine andere Zahnteilung als bei den Zähnen 99 des Sekundärteils 6. Dabei kann eine mehrphasige elektrische Maschine sowohl für eine gleiche als auch für ungleiche Zahnteilung am Primär- und Sekundärteil realisiert werden. Eine gleiche Zahnteilung ist beispielsweise in FIG 7 und FIG 11 dargestellt.

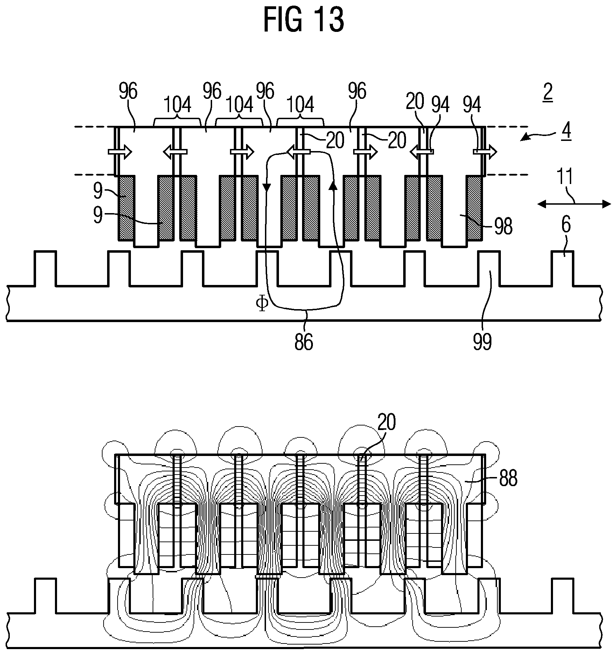

Die Darstellung eines erfindungsgemäßen Ausführungsbeispiels gemäß FIG 13 unterscheidet sich von der Darstellung gemäß FIG 12 im wesentlichen dadurch, dass anstelle von Zahnmagnete nunmehr Jochmagnete 20 als weiteres Mittel zur Erzeugung weiterer magnetischer Felder verwandt sind. Die Jochmagnete 20 sind auch Permanentmagnete und sind im Bereich eines Joches 104 positioniert. Das Joch 104 dient zur Verbindung von Zähnen 98. Aus der Positionierung der Magnete im Vergleich zu FIG 12 ergibt sich in FIG 13 auch ein anderes Erregerfeld 88.

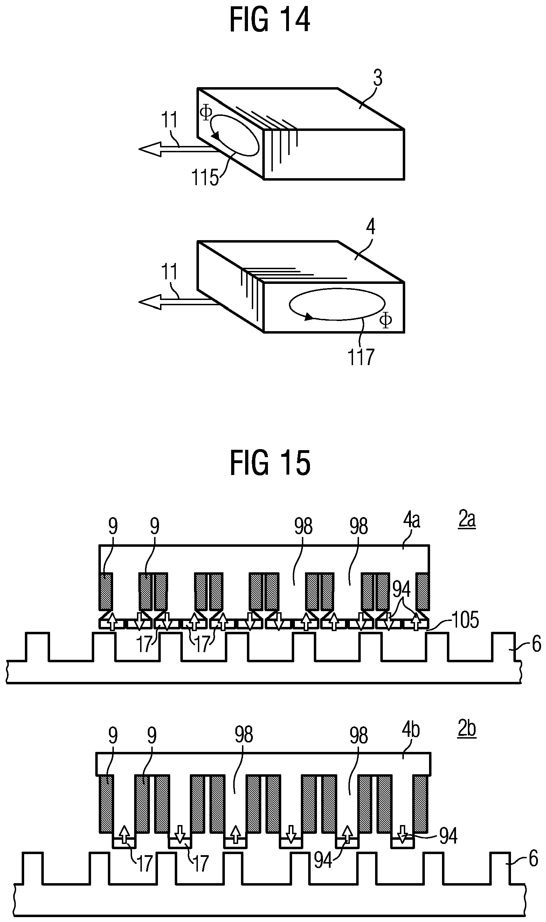

Die Darstellung gemäß FIG 14 zeigt schematisch eine Gegenüberstellung eines Primärteils 3.mit einem Querfluss-Magnetkreis 115 und eines Primärteils 4 mit einem Längsfluss-Magnetkreis 117. Die Primärteile 3,4 sind insbesondere Primärteil 3,4 eines in dieser Figur nicht dargestellten permanenterregten Synchronmotors, welcher Permanentmagnete im Primärteil aufweist, wobei die Permanentmagnete ebenfalls in dieser Figur nicht dargestellt sind. Der magnetische Fluss Φ ist jeweils nur symbolisch aufgezeigt. Auch weitere Mittel zur Erzeugung des magnetischen Flusses Φ, wie z. B. bestrombare Wicklungen, sind aus Gründen der besseren Übersichtlichkeit nicht dargestellt. Eine mögliche Bewegungsrichtung 11 ist durch einen Pfeil angegeben. Ein Sekundärteil, welches den jeweiligen Primärteilen 3 und 4 zugeordnet ist, ist in der FIG 14 nicht dargestellt. In der Darstellung ist auch gezeigt, dass bei einer Blechung der Primärteile 3 und 4 die Ausführung dieser von der Ausrichtung des jeweiligen Magnetkreises 115 und 117 abhängt. Bei dem Querfluss-Magnetkreis 115 schließt sich der magnetische Erregerfluss Φ hauptsächlich in einer quer zur Bewegungsrichtung 11 ausgerichteten Ebene. Die zur Blechung des Primärteils 3,4 verwendeten Motorbleche folgen der Flussebene und werden beispielsweise in einer Längsausdehnung des Primärteils 3 gestapelt, wobei die Längsausdehnung die Ausdehnung des Primärteils 3 in der Bewegungsrichtung 11 ist.

Die Darstellung gemäß FIG 15 zeigt eine Gegenüberstellung von elektrischen Maschinen 2a und 2b, wobei beide elektrische Maschinen 2a, 2b Linearmotoren sind. Die elektrische Maschine 2a weist ein Primärteil 4a auf, welches Zähne 98 aufweist, wobei an jeweils einem Zahn 98 Permanentmagnete 17 angebracht sind, welche eine unterschiedliche Magnetisierungsrichtung 94 aufweisen. Die Permanentmagnete 17 sind an der zu einem Luftspalt 105 zugewandten Seite des Primärteils angebracht. Die Magnetisierungsrichtung 94 der Permanentmagnete 17 ist hauptsächlich senkrecht zu einer Luftspaltebene.

Gemäß FIG 15 ist um die Zähne 98 jeweils eine Zahnspule 9 gewickelt. Da nun jeder der Zähne 98 Permanentmagnete 17 mit entgegengesetzten Magnetisierungsrichtungen 94 aufweist, ergibt sich bei einer Bewegung des Primärteils 4a relativ zum Sekundärteil 6 ein magnetischer Wechselfluss. Die elektrische Maschine 2a weist also eine Wechselfhuss-Anordnung auf. Mittels der Permanentmagnete 17, welche zur Ausbildung eines (magnetischen) Erregerfeldes dienen wird bei einer Relativbewegung des Sekundärteils 6 zum Primärteil 4a, im Magnetkreis ein magnetischer Wechselfluss erzeugt. Die Magnetisierungsrichtungen 94 der einzelnen Permanentmagnete 17 sind also derartig ausgerichtet, dass durch eine Bewegung des gezahnten Sekundärteils 6 in den spulentragenden Magnetkreisabschnitten des Primärteils 4a ein magnetischer Wechselfluss erzeugt wird.

Auch die elektrische Maschine 2b in FIG 15 weist ein Primärteil 4b auf, welches Zähne 98 aufweist. Im Gegensatz zur elektrischen Maschine 2a weisen die Zähne 98 bei der elektrischen Maschine 2b für jeden Zahn 98 nur einen Permanentmagnet 17 auf. Da der Permanentmagnet 17 eine Magnetisierungsrichtung 94 aufweist, ist jedem Zahn 98 nur eine Magnetisierungsrichtung 94 zugeordnet. Eine elektrische Maschine 2b ist auch derart ausbildbar, dass ein Zahn 98 mehrere Permanentmagnete aufweist, die jedoch bezogen auf einen Zahn 98 die gleiche Magnetisierungsrichtung aufweisen. Diese Variante ist in FIG 15 nicht explizit dargestellt. Bei der elektrischen Maschine 2b wechseln sich mit den Zähnen 98 am Primärteil 4b auch die Magnetisierungsrichtungen 94. Jeder Zahn weist also abwechselnd eine unterschiedliche Magnetisierungsrichtung 94 auf. Da nun die Zähne 98 Permanentmagnete 17 mit entgegengesetzten Magnetisierungsrichtungen 94 aufweisen, ergibt sich bei einer Bewegung des Primärteils 4b relativ zum Sekundärteil 6 ein magnetischer Gleichfluss. Die elektrische Maschine 2b weist also eine Gleichfluss-Anordnung auf. Mittels der Permanentmagnete 17, welche zur Ausbildung eines (magnetischen) Erregerfeldes dienen wird bei einer Relativbewegung des Sekundärteils 6 zum Primärteil 4b, im Magnetkreis ein magnetischer Gleichfluss erzeugt. Die Magnetisierungsrichtungen 94 der einzelnen Permanentmagnete 17 sind bei der elektrischen Maschine 2b in FIG 15 derartig ausgerichtet, dass durch eine Bewegung des gezahnten Sekundärteils 6 in den spulentragenden Magnetkreisabschnitten des Primärteils 4b ein magnetischer Gleichfluss erzeugt wird, wobei der magnetische Gleichfluss seine Richtung nicht wechselt und zwischen einem Maximal- und einem Minimalwert periodisch schwingt.

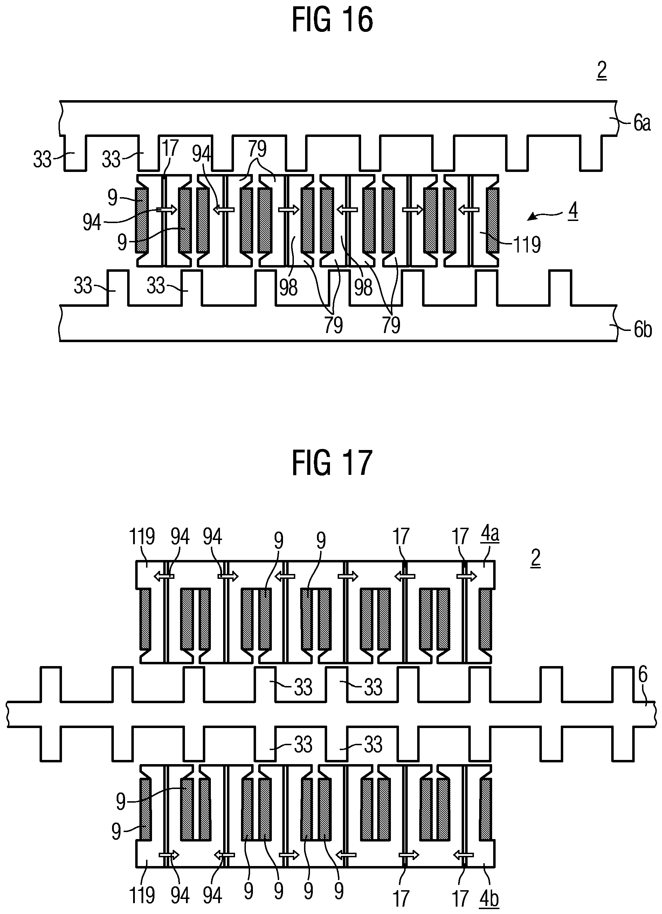

In den Darstellungen gemäß FIG 15 oder auch FIG 12 ist eine Anordnung gewählt, bei welcher eine Kraftwirkung zwischen einem Primärteil und einem Sekundärteil erzielbar ist. Die Darstellung gemäß FIG 16 zeigt eine Anordnung einer elektrischen Maschine welche ein Primärteil 4 und zwei Sekundärteile 6a und 6b aufweist. Eine Kraftwirkung ergibt sich also zwischen nur einem Primärteil 4 und zwei Sekundärteilen 6a und 6b. Hieraus ergibt sich eine annähernde Verdoppelung der erzeugbaren Kraft. Die Zähne 98 des Primärteils 3 des Linearmotors nach FIG 16 weisen jeweils zwei Polschuhe 79 auf, wobei jedem Polschuh 79 ein Sekundärteil 6a oder 6b zugewandt ist. Dieses Beispiel der elektrischen Maschine 2 nach FIG 16 ist eine Art Weiterbildung der elektrischen Maschine 2 nach FIG 12. Die doppelseitige Anordnung der Sekundärteile ist dabei nicht auf das in FIG 16 dargestellte Beispiel des Primärteils 4 beschränkt, bei der die Permanentmagnete 17 in einem weichmagnetischen Material 119 eingebettet sind. Es sind auch Primärteile ausführbar, welche auf den Polschuhen Permanentmagnete aufweisen. Ein derartiges Beispiel ist jedoch in FIG 16 nicht dargestellt.

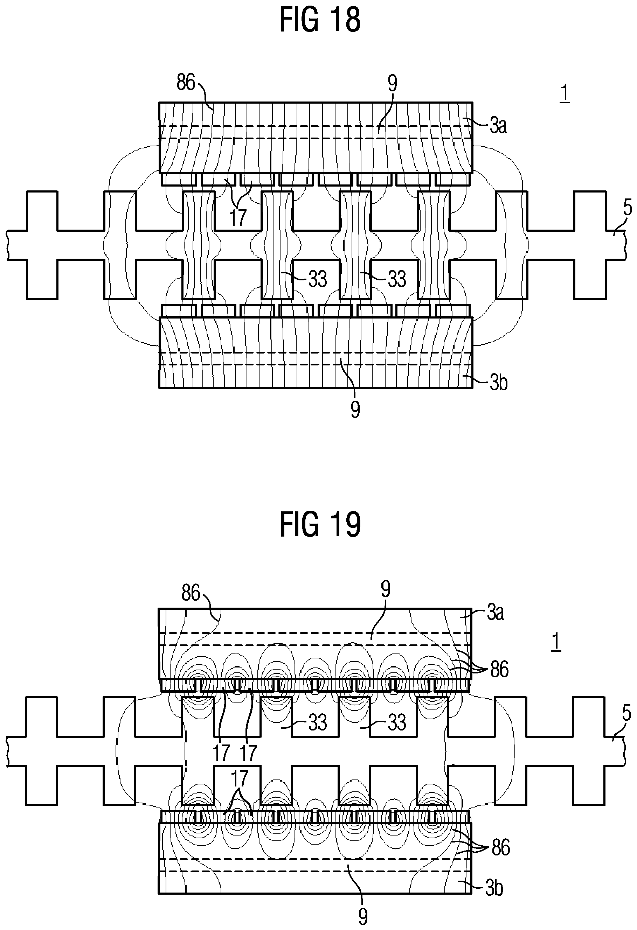

Die Darstellung gemäß FIG 17 zeigt eine Anordnung einer elektrischen Maschine 2 welche zwei Primärteile 4a und 4b und nur ein zugeordnetes Sekundärteile 6 aufweist. Eine Kraftwirkung ergibt sich also zwischen nur einem Sekundärteil 6 und zwei Primärteilen 4a und 4b. Hieraus ergibt sich eine annähernde Verdoppelung der erzeugbaren Kraft. Die Zähne 3 des Sekundärteils des Linearmotors 2 nach FIG 16 weisen eine beidseitige Ausrichtung zu jeweils einem Primärteil 4a und 4b auf. Jedem Primärteil 4a und 4b sind also Zähne 33 des einen Sekundärteils 5 zugeordnet. Dieses Beispiel der elektrischen Maschine 2 nach FIG 17 ist eine Art Weiterbildung der elektrischen Maschine 2 nach FIG 12. Die doppelseitige Anordnung der Primärteile 4a und 4b ist dabei nicht auf das in FIG 16 dargestellte Beispiel des Primärteils 4a beschränkt, bei der die Permanentmagnete 17 in einem weichmagnetischen Material 119 eingebettet sind. Es sind auch Primärteile ausführbar, welche beispielsweise wie in FIG 10 auf den Polschuhen Permanentmagnete aufweisen. Ein derartiges Beispiel ist jedoch in FIG 17 nicht dargestellt. Die Darstellung gemäß FIG 18 zeigt beispielhaft den magnetischen Feldverlauf bei einer elektrischen Maschine 1 welche zwei Primärteile 3a und 3b und ein Sekundärteil 5 aufweist. Die Primärteile 3a und 3b weisen Permanentmagnete 17 und eine Wicklung 9 auf. In der Darstellung nach FIG 18 ist der magnetische Fluss 86 dargestellt, welcher sich durch einen Strom durch die strichliniert dargestellte Wicklung 9 der Primärteile ergibt. Bei dem in FIG 18 dargestellten magnetischen Fluss 86 ist der durch die Permanentmagnete hervorgerufenen magnetische Fluss nicht berücksichtig.

Die Darstellung gemäß FIG 19 zeigt wie FIG 18 beispielhaft den magnetischen Feldverlauf bei einer elektrischen Maschine 1, welche zwei Primärteile 3a und 3b und ein Sekundärteil 5 aufweist, wobei der in FIG 19 dargestellte magnetische Feldverlauf nur von den Permanentmagneten 17 herrührt. Bei dem in FIG 19 dargestellten magnetischen Fluss 86 ist der durch die bestrombaren Wicklungen 9 der Primärteile hervorgerufenen magnetische Fluss nicht berücksichtig.

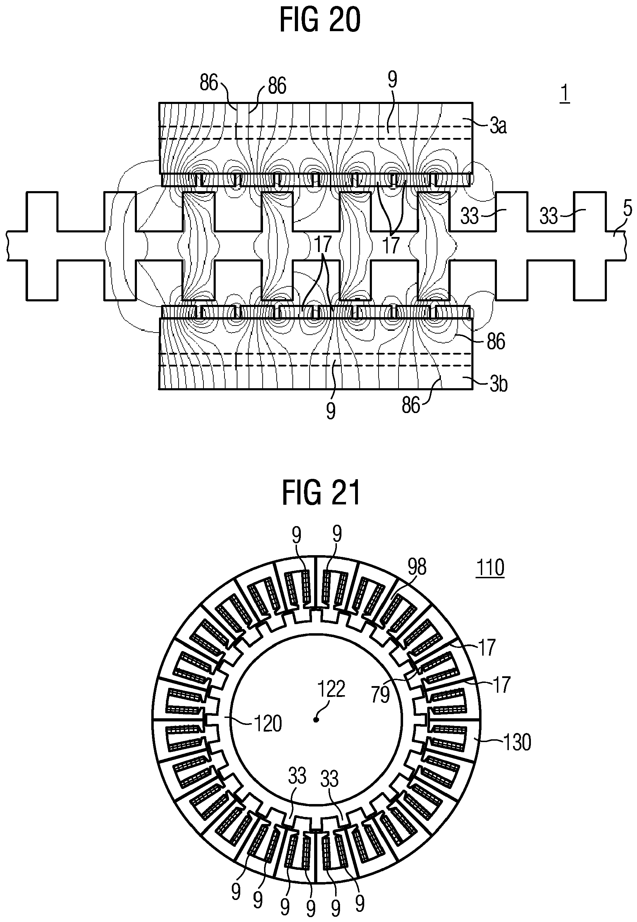

Die Darstellung gemäß FIG 20 zeigt wie FIG 18 und 19 beispielhaft den magnetischen Feldverlauf bei einer elektrischen Maschine 1, wobei nunmehr die magnetischen Felder der Permanentmagnete 17 und der bestromten Wicklung 9 überlagert sind. In FIG 20 ist also die Überlagerung der in FIG 18 und in FIG 19 einzeln dargestellten magnetischen Felder gezeigt. Des weiteren zeigt FIG 20, dass das Sekundärteil 5 zwischen zwei Primärteilen 3a und 3b angeordnet ist, wobei diese Anordnung zur Ausbildung eines gemeinsamen Magnetkreis, welcher die beiden Primärteile 3a,3b und das Sekundärteil 5 betrifft, dient.

Die Darstellung gemäß FIG 21 zeigt eine rotatorische elektrische Maschine 110. Diese rotatorische elektrische Maschine ist beispielsweise ein Synchronmotor oder auch ein Synchrongenerator. Die elektrische Maschine 110 weist einen Ständer 130 und einen Rotor 120 auf. Der Rotor 120 ist um eine Achse 122 drehbar. Der Rotor 120 ist das Sekundärteil der elektrischen Maschine 110. Der Ständer 130 ist das Primärteil der elektrischen Maschine 110. Der Rotor 120 weist wie auch die Sekundärteile der obig beschriebenen Linearmotoren Zähne 33 auf. Der Ständer 130 der elektrischen Maschine 110 weist Wicklungen 9 um Zähne 98, welche Polschuhe 79 aufweisen, und Permanentmagnete 17 auf. Das Beispiel der rotatorischen elektrischen Maschine 110 in FIG 21 ist nur eine Möglichkeit für verschiedenes Beispiele der rotatorischen elektrischen Maschine. Andere nicht dargestellte Ausführungsformen der rotatorischen elektrischen Maschine ergeben sich beispielsweise durch die analoge Übertragung der Ausführungsform des Linearmotors gemäß der vorangegangenen Figurenbeschreibung zu FIG 13. weiterhin ist es auch bei rotatorischen Maschinen möglich Ausführungsformen anzugeben, bei welchen einem Primärteil zwei Sekundärteilen zugeordnet sind oder bei welchen einem Sekundärteil zwei Primärteile zugeordnet sind. Diese Varianten sind in den Figuren jedoch nicht dargestellt.

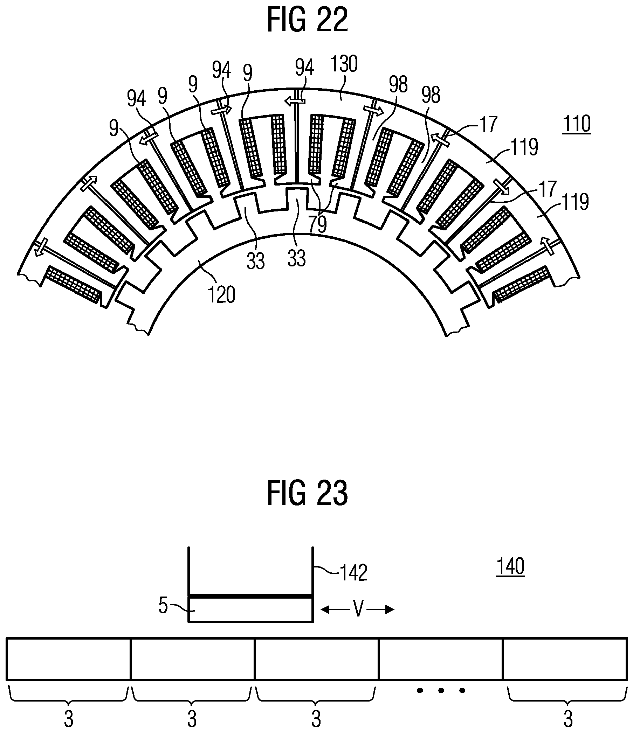

Die Darstellung gemäß FIG 22 zeigt einen Detailausschnitt aus der Darstellung gemäß FIG 21. In der FIG 22 ist die Positionierung (Einbettung) der Permanentmagnete 17 innerhalb eines weichmagnetischen Materials detaillierter dargestellt. In FIG 22 kommt es auch zur Darstellung der Magnetisierungsrichtungen 94 der Permanentmagnete 17, wobei von Zahn 98 zu Zahn 98 immer ein Wechsel der Magnetisierungsrichtung erfolgt und auch dargestellt ist.

Die Darstellung gemäß FIG 23 zeigt ein Beispiel für eine Transport- und/oder Positioniereinrichtung 140. Die Transporteinrichtung 140 weist zumindest ein Primärteil 3 oder auch mehrere Primärteile 3 auf. Die Primärteile 3 bilden eine Transportbahn aus. Den Primärteilen 3 ist ein Sekundärteil 5 zugeordnet. Auf dem Sekundärteil 5 befindet sich beispielsweise ein Transportbehältnis 142. Die Transporteinrichtung 140 kann auch mehrere Sekundärteile 5 aufweisen, wobei dies nicht dargestellt ist. Für den Fall dass mehrere Primärteile 3 vorhanden sind, können diese vorteilhafterweise unabhängig voneinander als mehrere separate Motoren oder auch gemeinsam als ein Motor angesteuert werden.

Eine weitere vorteilhafte Ausführung der Transport- und/oder Positioniervorrichtung ist mit einem kurzen Primärteil und einer langen Sekundärteilstrecke realisierbar. Dadurch ergeben sich Vorteile hinsichtlich einer kostengünstigen Fertigung (weniger Permanentmagnetmaterial) und eine Betriebs- und Sicherheitsrelevante Bauweise (keine offene Magnetstrecke). Eine solche Transportvorrichtung ist in FIG 23 aber nicht dargestellt.

**Patentansprüche**

1. Elektrische Maschine (2), insbesondere Synchronmaschine, mit einem Primärteil (4) mit Zähnen (98), die jeweils von einer Spule (9) umgeben sind, und wobei die Zähne (98) über ein Joch (104) miteinander verbunden sind, wobei die Zähne (98) und das Joch (104) des Primärteils (4) aus weichmagnetischem Material sind, und mit einem Sekundärteil (6) mit Zähnen (99), wobei das Sekundärteil (6) ein Mittel zur Führung eines magnetischen Feldes aufweist und wobei das Sekundärteil (6) frei von Mitteln zur Erzeugung eines magnetischen Feldes ist,
**dadurch gekennzeichnet,**
**dass** im Joch (104) Permanentmagnete (20) angeordnet sind, die sich jeweils parallel zu einer Spulenachse (100) in gleicher Höhe wie das Joch (104) innerhalb des Jochs erstrecken, wobei jeweils ein Permanentmagnet (20) bezüglich der Bewegungsrichtung (11) der elektrischen Maschine (2) mittig zwischen zwei benachbarten Zähnen (98) angeordnet ist, wobei die Magnetisierungsrichtungen der Permanentmagnete (20) parallel zur Bewegungsrichtung (11) sind und sich die die Magnetisierungsrichtung benachbarter Permanentmagnete (20) jeweils umkehrt.

2. Elektrische Maschine (2) nach Anspruch 1,
**dadurch gekennzeichnet, dass** das Sekundärteil (6) der elektrischen Maschine (2) zumindest ein Mittel (31,32,33,34,99) zum magnetischen Rückschluss aufweist und frei von magnetischen Quellen ist.

3. Elektrische Maschine (2) nach einem der Ansprüche 1 oder 2,
**dadurch gekennzeichnet, dass** die Zahnteilung des Sekundärteils (6) von einem ganzzahligen Vielfachen der Magnetteilung des Primärteils (4) unterschiedlich ist.

4. Elektrische Maschine (2) nach einem der Ansprüche 1 bis 3,
**dadurch gekennzeichnet, dass** das Sekundärteil (6) zwischen zwei Primärteilen (4) angeordnet ist, wobei diese Anordnung zur Ausbildung eines gemeinsamen Magnetkreises, welcher die beiden Primärteile (4) und das Sekundärteil (6) betrifft, dient.

5. Transporteinrichtung (140) mit einer elektrischen Maschine (2)nach einem der Ansprüche 1 bis 4.

## Claims

1. Electric machine (2), in particular synchronous machine, having a primary part (4) with teeth (98), which are each surrounded by a coil (9), the teeth (98) being connected to one another via a yoke (104), the teeth (98) and the yoke (104) of the primary part (4) being composed of soft-magnetic material, and having a secondary part (6) with teeth (99), the secondary part (6) having a means for guiding a magnetic field and the secondary part (6) being free of means for producing a magnetic field, **characterized in that** permanent magnets (20) are arranged in the yoke (104) and each extend within the yoke parallel to a coil axis (100) at the same height as the yoke (104), in each case one permanent magnet (20) being arranged centrally with respect to the movement direction (11) of the electric machine (2) between two adjacent teeth (98), the magnetization directions of the permanent magnets (20) being parallel to the movement direction (11) and the magnetization direction of adjacent permanent magnets (20) being reversed in each case.

2. Electric machine (2) according to Claim 1, **characterized in that** the secondary part (6) of the electric machine (2) has at least one means (31, 32, 33, 34, 99) for the magnetic return path and is free of magnetic sources.

3. Electric machine (2) according to one of Claims 1 or 2, **characterized in that** the tooth pitch of the secondary part (6) is different than an integral multiple of the magnet pitch of the primary part (4).

4. Electric machine (2) according to one of Claims 1 to 3, **characterized in that** the secondary part (6) is arranged between two primary parts (4), this arrangement serving the purpose of forming a common magnetic circuit, which relates to the two primary parts (4) and the secondary part (6).

5. Transport device (140) having an electric machine (2) according to one of Claims 1 to 4.

## Revendications

1. Machine (2) électrique, notamment machine synchrone, comprenant une partie (4) primaire ayant des dents (98), entourées chacune d'une bobine (9), les dents étant reliées entre elles par une culasse (104), les dents (98) et la culasse (104) de la partie (4) primaire étant en un matériau à magnétisme doux, et comprenant une partie (6) secondaire ayant des dents (99), la partie (6) secondaire ayant un moyen de guidage d'un flux magnétique et la partie (6) secondaire étant sans moyen de production d'un champ magnétique, **caractérisée en ce que**, dans la culasse (104) sont disposés des aimants (20) permanents, qui s'étendent, au sein de la culasse, respectivement parallèlement à un axe (100) de bobine à la même hauteur que la culasse (104), dans laquelle respectivement un aimant (20) permanent est, par rapport au sens (11) de déplacement de la machine (2) électrique, disposé au milieu entre deux dents (98) voisines, les sens d'aimantation des aimants (20) permanents étant parallèles aux sens (11) de déplacement et les sens d'aimantation d'aimants (20) permanents voisins sont contraires.

2. Machine (2) électrique suivant la revendication 1, **caractérisée en ce que** la partie (6) secondaire de la machine (2) électrique a au moins un moyen (31, 32, 33, 34, 99) de reflux magnétique et est sans source magnétique.

3. Machine (2) électrique suivant l'une des revendications 1 ou 2, **caractérisée en ce que** le pas des dents de la partie (6) secondaire est différent d'un multiple en nombre entier du pas des aimants de la partie (4) primaire.

4. Machine (2) électrique suivant l'une des revendications 1 à 3, **caractérisée en ce que** la partie (6) secondaire est disposée entre deux parties (4) primaires, cet agencement servant à constituer un circuit magnétique commun, qui concerne les deux parties (4) primaires et la partie (6) secondaire.

5. Dispositif (140) de transport, comprenant une machine (2) électrique suivant l'une des revendications 1 à 4.

# FIG 1

# FIG 2

# FIG 3

# FIG 4

# FIG 5

# FIG 6

$$\vec{F} = I \int d\vec{s} \times \vec{B}$$

# FIG 7

# FIG 8

# FIG 9

# FIG 10

# FIG 11

EP 1 792 385 B1

EP 1 792 385 B1

# FIG 12

18

# FIG 13

# FIG 14

# FIG 15

## FIG 16

## FIG 17

# FIG 18

# FIG 19

# FIG 20

# FIG 21

# FIG 22

# FIG 23

## EP 1 792 385 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030122440 A1

- US RE37027 E

**In der Beschreibung aufgeführte Nicht-Patentliteratur**

- **N. IWABUCHI et al.** A Novel High-Torque Reluctance Motor with Rare-Earth Magnet. *IEEE Transactions on Industry Applications,* Mai 1994, vol. 20, 609-613